# EUROPEAN PATENT APPLICATION

(11) **EP 4 477 535 A1**
(43) Date of publication of application: **18.12.2024**
(21) Application number: 23752589.4
(22) Date of filing: 10.01.2023
(51) Int. Cl.: B64C 13/20, B64C 39/02, B64D 17/00, B64U 10/25, G01W 1/10, G08G 5/00, H04W 84/06, B64U 101/20

(54) **INFORMATION PROCESSING DEVICE, PROGRAM, SYSTEM, AND INFORMATION PROCESSING METHOD**

(30) Priority: 09.02.2022 JP 2022018477
(71) Applicant: Softbank Corp., Tokyo 105-7529 (JP)
(72) Inventor: TSUTSUI Tatsushi, Tokyo 105-7529 (JP); MAEHARA Shoichi, Tokyo 105-7529 (JP); HARADA Satoshi, Tokyo 105-7529 (JP); SUGASAWA Takuya, Tokyo 105-7529 (JP)
(74) Representative: Michalski Hüttermann & Partner Patentanwälte mbB
(86) International application number: PCT/JP2023/000335
(87) International publication number: WO 2023/153120

(57) **Abstract**

An information processing apparatus is provided, including: a prediction result obtainment unit which obtains a result of prediction of weather in stratosphere; and a flight path determination unit which determines a flight path of a flight vehicle based on the result of prediction of weather in stratosphere such that the flight vehicle flies through an area in stratosphere that has been predicted to satisfy a predetermined stratospheric path condition, wherein the flight vehicle functions as a stratospheric platform, and forms a wireless communication area by emitting a beam and provides a wireless communication service to a user terminal in the wireless communication area.

## Description

### BACKGROUND

### 1. TECHNICAL FIELD

The present invention relates to an information processing apparatus, a program, a system, and an information processing method.

### 2. RELATED ART

Patent Document 1 describes a high altitude platform station (HAPS) that establishes a feeder link with a ground gateway, establishes a service link with a ground terminal, and provides a wireless communication service to the terminal by relaying communication between the gateway and the terminal.

### Prior Art Document

### Patent Document

Patent Document 1: Japanese Patent Application Publication No. 2019-135823

### GENERAL DISCLOSURE

One embodiment of the present invention provides an information processing apparatus. The information processing apparatus may include a prediction result obtainment unit which obtains a result of prediction of weather in stratosphere. The information processing apparatus may include a flight path determination unit which determines a flight path of a flight vehicle based on the result of prediction of weather in stratosphere such that the flight vehicle flies through an area in stratosphere that has been predicted to satisfy a predetermined stratospheric path condition, wherein the flight vehicle functions as a stratospheric platform, and forms a wireless communication area by emitting a beam and provides a wireless communication service to a user terminal in the wireless communication area.

The prediction result obtainment unit may further obtain a result of prediction of weather in troposphere. The flight path determination unit may determine the flight path based on the result of prediction of weather in troposphere such that the flight vehicle further flies through an area in troposphere that has been predicted to satisfy a predetermined tropospheric path condition. The flight path determination unit may determine the flight path based on a predicted wind speed in stratosphere included in the result of prediction of weather in stratosphere and on a predicted wind speed in troposphere included in the result of prediction of weather in troposphere, such that the flight vehicle flies through an area in stratosphere where the predicted wind speed in stratosphere is lower than a predetermined stratospheric wind speed threshold and flies through an area in troposphere where the predicted wind speed in troposphere is lower than a predetermined tropospheric wind speed threshold. The flight path determination unit may determine the flight path based on a predicted cloud amount in stratosphere included in the result of prediction of weather in stratosphere and on a predicted cloud amount in troposphere included in the result of prediction of weather in troposphere, such that the flight vehicle flies through an area in stratosphere where the predicted cloud amount in stratosphere is lower than a predetermined stratospheric cloud amount threshold and flies through an area in troposphere where the predicted cloud amount in troposphere is lower than a predetermined tropospheric cloud amount threshold. The flight path determination unit may determine the flight path based on a predicted temperature in stratosphere included in the result of prediction of weather in stratosphere and on a predicted temperature in troposphere included in the result of prediction of weather in troposphere, such that the flight vehicle flies through an area in stratosphere where the predicted temperature in stratosphere is higher than a predetermined stratospheric temperature threshold and flies through an area in troposphere where the predicted temperature in troposphere is higher than a predetermined tropospheric temperature threshold.

The flight path determination unit may determine the flight path by giving priority to a flight path with a shorter flight distance that the flight vehicle flies to a target point, among flight paths for a flight through the area in stratosphere that has been predicted to satisfy the stratospheric path condition and the area in troposphere that has been predicted to satisfy the tropospheric path condition. The flight path determination unit may determine the flight path by giving priority to a flight path with a shorter flight time required for the flight vehicle to fly to a target point, among flight paths for a flight through the area in stratosphere that has been predicted to satisfy the stratospheric path condition and the area in troposphere that has been predicted to satisfy the tropospheric path condition. The flight path determination unit may determine the flight path by giving priority to a flight path with less electrical power required for the flight vehicle to fly to a target point, among flight paths for a flight through the area in stratosphere that has been predicted to satisfy the stratospheric path condition and the area in troposphere that has been predicted to satisfy the tropospheric path condition. The information processing apparatus may include a supervised data storage unit which associates and stores flight path information indicating the flight path determined by the flight path determination unit, weather information indicating weather along the flight path when the flight vehicle has flown along the flight path, and score information indicating a score for the flight path. The information processing apparatus may include a model generation unit which generates, by machine learning, an estimation model that estimates the score for the flight path, by using, as supervised data, a plurality of pieces of the flight path information, the weather information, and the score information that are stored in the supervised data storage unit, from the result of prediction of weather in stratosphere and the result of prediction of weather in troposphere that are obtained by the prediction result obtainment unit and from the flight path determined by the flight path determination unit. The flight path determination unit may determine the flight path by giving priority to a flight path for which the score estimated using the estimation model is higher, among flight paths for a flight through the area in stratosphere that has been predicted to satisfy the stratospheric path condition and the area in troposphere that has been predicted to satisfy the tropospheric path condition, from the result of prediction of weather in stratosphere and the result of prediction of weather in troposphere and from the flight path.

The prediction result obtainment unit may further obtain a result of prediction of weather at tropopause that is a boundary surface between troposphere and stratosphere. The flight path determination unit may determine the flight path based on the result of prediction of weather at tropopause such that the flight vehicle further flies through an area at tropopause that has been predicted to satisfy a predetermined tropopause path condition. The flight path determination unit may determine the flight path based on a predicted wind speed at tropopause included in the result of prediction of weather at tropopause, such that the flight vehicle flies through an area at tropopause where the predicted wind speed at tropopause is lower than a predetermined tropopause wind speed threshold. The information processing apparatus may include a flight vehicle related information obtainment unit which obtains flight position information indicating a flight position of the flight vehicle and flight control availability information indicating whether a flight of the flight vehicle can be controlled or cannot be controlled. The information processing apparatus may include a timing determination unit which, if the flight control availability information indicates that the flight of the flight vehicle cannot be controlled, determines timing when a parachute mounted on the flight vehicle is to be opened, based on the flight position indicated by the flight position information and on the result of prediction of weather in stratosphere and the result of prediction of weather in troposphere.

The flight path determination unit may determine the flight path such that the flight vehicle makes a duration flight through the area in stratosphere that has been predicted to satisfy the stratospheric path condition. The flight path determination unit may determine the flight path based on a predicted temperature in stratosphere included in the result of prediction of weather in stratosphere, such that the flight vehicle makes a duration flight through an area in stratosphere where the predicted temperature in stratosphere is higher than a predetermined stratospheric temperature threshold. The information processing apparatus may further include an ozone concentration obtainment unit which obtains an ozone concentration in stratosphere. The flight path determination unit may determine the flight path such that the flight vehicle makes a duration flight through an area in stratosphere where the ozone concentration in stratosphere is higher than a predetermined ozone concentration threshold. The flight path determination unit may determine the flight path along which the flight vehicle makes a duration flight through stratosphere, based on a predicted wind speed and a predicted wind direction in stratosphere included in the result of prediction of weather in stratosphere, such that a shift in the wireless communication area caused by wind in stratosphere is reduced. The information processing apparatus may include a weather information obtainment unit which obtains weather information indicating weather in stratosphere. The information processing apparatus may include a weather prediction unit which predicts weather in stratosphere based on the weather information. The flight path determination unit may determine the flight path of the flight vehicle based on the result of prediction of weather in stratosphere predicted by the weather prediction unit. The weather information obtainment unit may obtain weather information indicating weather in troposphere. The weather prediction unit may predict weather in troposphere based on the weather information. The weather information obtainment unit may obtain weather information indicating weather at tropopause. The weather prediction unit may predict weather at tropopause based on the weather information.

One embodiment of the present invention provides a program that causes a computer to function as the information processing apparatus.

One embodiment of the present invention provides a system. The system may include the information processing apparatus. The system may include the flight vehicle.

One embodiment of the present invention provides an information processing method executed by a computer. The information processing method may include obtaining a result of prediction of weather in stratosphere. The information processing method may include determining a flight path of a flight vehicle based on the result of prediction of weather in stratosphere such that the flight vehicle flies through an area in stratosphere that has been predicted to satisfy a predetermined stratospheric path condition, wherein the flight vehicle functions as a stratospheric platform, and forms a wireless communication area by emitting a beam and provides a wireless communication service to a user terminal in the wireless communication area.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows one example of a system 10.
Fig. 2 schematically shows one example of a functional configuration of an information processing apparatus 300.
Fig. 3 is an explanatory diagram for describing one example in which an information processing apparatus 300 determines a flight path of a flight vehicle 100.
Fig. 4 is an explanatory diagram for describing another example in which an information processing apparatus 300 determines a flight path of a flight vehicle 100.
Fig. 5 is an explanatory diagram for describing another example in which an information processing apparatus 300 determines a flight path of a flight vehicle 100.
Fig. 6 is an explanatory diagram for describing one example of a flow of processing by an information processing apparatus 300.
Fig. 7 schematically shows one example of a hardware configuration of a computer 1200 which functions as an information processing apparatus 300.

### DESCRIPTION OF EXEMPLARY EMBODIMENTS

When operating a HAPS, it is essential to check information on a meteorological phenomenon along a flight route. However, currently, there is no system that can consistently check information on ground to stratospheric meteorological phenomena. A system 10 according to the present embodiment predicts ground to stratospheric meteorological phenomena around the world by using in-house modeling, based on meteorological information obtained by the HAPS during a flight or meteorological information brought from individual agencies, for example.

Hereinafter, the present invention will be described through embodiments of the invention, but the following embodiments do not limit the invention according to claims. In addition, not all of the combinations of features described in the embodiments are essential to the solution of the invention.

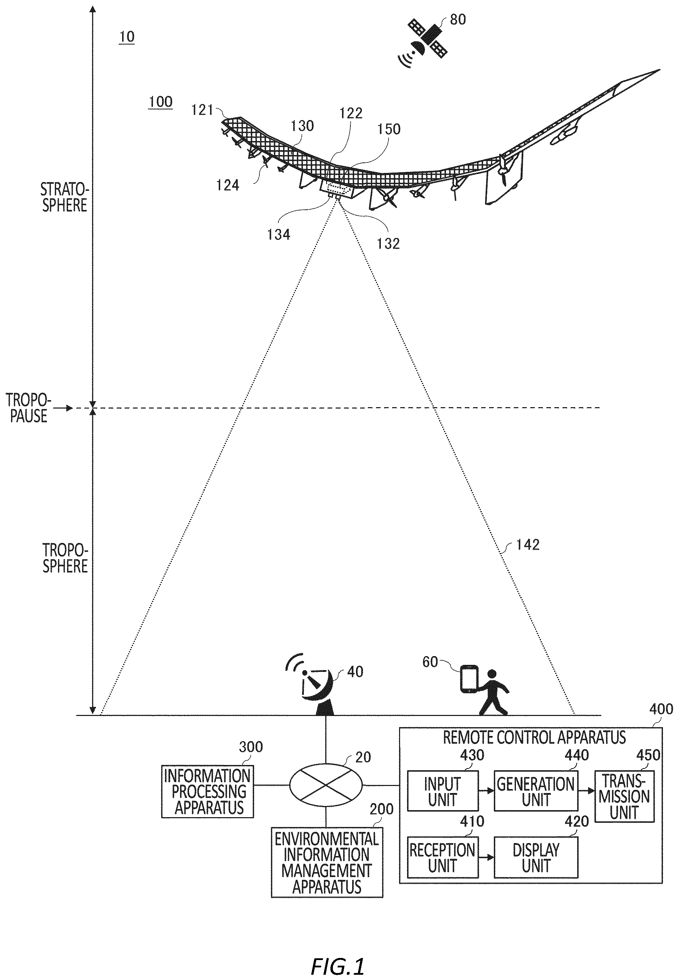

Fig. 1 schematically shows one example of a system 10. The system 10 includes a flight vehicle 100 and an information processing apparatus 300. The system 10 may include an environmental information management apparatus 200. The system 10 may include a remote control apparatus 400. The system 10 may include a gateway 40. The system 10 may include a communication satellite 80.

The flight vehicle 100 has a main wing portion 121, a main body portion 122, propellers 124, a solar cell panel 130, a service link (SL) antenna 132, and a feeder link (FL) antenna 134. A battery is arranged in at least one of the main wing portion 121 or the main body portion 122. The battery stores electrical power generated by the solar cell panel 130. The main body portion 122 includes a control apparatus 150.

The control apparatus 150 controls the flight vehicle 100. The control apparatus 150 causes the flight vehicle 100 to fly by causing the propellers 124 to rotate using the electrical power stored in the battery, for example. The flight vehicle 100 may fly in accordance with control by the control apparatus 150.

The control apparatus 150 controls, for example, communication of the flight vehicle 100. The flight vehicle 100 may communicate in accordance with control by the control apparatus 150.

The flight vehicle 100 forms a wireless communication area 142 by emitting a beam by using the SL antenna 132, for example, and provides a wireless communication service to a user terminal 60 in the wireless communication area 142. The flight vehicle 100 adjusts a position or a range of the wireless communication area 142 by adjusting an irradiation position or an irradiation range of the beam emitted by the SL antenna 132 by using a beamforming technique, for example. The flight vehicle 100 establishes a service link with the user terminal 60 in the wireless communication area 142 by using the SL antenna 132, for example.

The SL antenna 132 may be any antenna as long as the antenna can provide a wireless communication service to the user terminal 60 in the wireless communication area 142. The SL antenna 132 is, for example, an array antenna. The SL antenna 132 is, for example, an adaptive array antenna.

The user terminal 60 may be any communication terminal as long as the communication terminal can establish a service link with the flight vehicle 100. For example, the user terminal 60 is a mobile phone such as a smartphone, a tablet terminal, a wearable terminal, and the like. The user terminal 60 may be a personal computer (PC). The user terminal 60 may be an Internet of things (IoT) terminal. The user terminal 60 may include everything corresponding to Internet of everything (IoE).

The flight vehicle 100 establishes a feeder link with the gateway 40 by emitting a beam by using the FL antenna 134, for example. The flight vehicle 100 adjusts an irradiation position or an irradiation range of the beam emitted by the FL antenna 134 by using a beamforming technique, for example. The flight vehicle 100 may access a network 20 via the gateway 40.

The FL antenna 134 may be any antenna as long as the antenna can establish a feeder link with the gateway 40. The FL antenna 134 is, for example, an array antenna. The FL antenna 134 is, for example, an adaptive array antenna.

The network 20 may include a core network provided by a communication operator. The core network is compliant with, for example, a 5th generation (5G) communication system. The core network may be compliant with a mobile communication system of a 6th generation (6G) or its subsequent generation communication system. The core network may be compliant with a 3rd generation (3G) communication system. The core network may be compliant with a long term evolution (LTE) communication system. The network 20 may include Internet.

The flight vehicle 100 establishes wireless communication connection with another flight vehicle 100 (not shown) by emitting a beam by using an antenna (not shown) mounted on the flight vehicle 100, for example. The flight vehicle 100 may access the network 20 via another flight vehicle 100.

The flight vehicle 100 may establish wireless communication connection with the communication satellite 80 by using an antenna (not shown) mounted on the flight vehicle 100. The flight vehicle 100 may access the network 20 via the communication satellite 80.

The flight vehicle 100, for example, flies in stratosphere to provide a wireless communication service to the user terminal 60. The stratosphere is an area extending from an altitude of about 10 km to an altitude of about 50 km, for example. The flight vehicle 100 may function as a stratospheric platform. The flight vehicle 100 may be a HAPS. The flight vehicle 100 covers an area to be covered on ground with the wireless communication area 142 while flying around above the area, for example.

The flight vehicle 100, for example, obtains position information indicating a position of the flight vehicle 100. The flight vehicle 100 obtains the position information by using a global navigation satellite system (GNSS) function, for example. The flight vehicle 100 obtains the position information by using a global positioning system (GPS) function, for example. The flight vehicle 100 may obtain the position information by using a real time kinematic (RTK) function.

The position information is, for example, flight position information indicating a flight position of the flight vehicle 100. The position information may be stop position information indicating a stop position of the flight vehicle 100.

The position information includes, for example, longitude information indicating longitude of the flight vehicle 100. The position information includes, for example, latitude information indicating latitude of the flight vehicle 100. The position information includes, for example, altitude information indicating an altitude of the flight vehicle 100.

The flight vehicle 100 obtains environmental information indicating a nature environment by using measurement equipment (not shown) mounted on the flight vehicle 100, for example. The environmental information includes, for example, information on an environment of the stratosphere. The environmental information includes, for example, information on an environment of troposphere. The troposphere is an area extending from the ground to an altitude of about 10 km, for example. The environmental information may include information on an environment of tropopause that is a boundary surface between the troposphere and the stratosphere.

The environmental information includes, for example, weather information indicating weather. The weather information includes, for example, wind speed information indicating a wind speed. The weather information includes, for example, wind direction information indicating a wind direction. The weather information includes, for example, cloud amount information indicating a cloud amount. The weather information includes, for example, rainfall amount information indicating a rainfall amount. The weather information includes, for example, snowfall amount information indicating a snowfall amount. The weather information includes, for example, temperature information indicating a temperature. The weather information includes, for example, humidity information indicating humidity. The weather information includes, for example, atmospheric pressure information indicating an atmospheric pressure. The weather information includes, for example, solar radiation intensity information indicating solar radiation intensity. The weather information may include ultraviolet intensity information indicating ultraviolet intensity. The environmental information may include ozone concentration information indicating an ozone concentration.

The measurement equipment may be any equipment as long as the equipment can obtain the environmental information. The measurement equipment includes, for example, an anemometer. The measurement equipment includes, for example, an anemoscope. The measurement equipment includes, for example, a nephometer. The measurement equipment includes, for example, a rainfall meter. The measurement equipment includes, for example, a snowfall meter. The measurement equipment includes, for example, a thermometer. The measurement equipment includes, for example, a hygrometer. The measurement equipment includes, for example, a barometer. The measurement equipment includes, for example, a solar radiation intensity meter. The measurement equipment includes, for example, an ultraviolet meter. The measurement equipment may include an ozone concentration meter.

The measurement equipment is, for example, a wind profiler. The measurement equipment is, for example, a radiosonde. The measurement equipment may be an ozonesonde.

The flight vehicle 100 communicates with an external apparatus via the network 20, for example. The flight vehicle 100 communicates with the environmental information management apparatus 200, for example. The flight vehicle 100 communicates with the information processing apparatus 300, for example. The flight vehicle 100 may communicate with the remote control apparatus 400.

The environmental information management apparatus 200 manages the environmental information. The environmental information management apparatus 200 manages the environmental information obtained by the measurement equipment mounted on the flight vehicle 100, for example. The environmental information management apparatus 200 manages environmental information obtained by measurement equipment mounted on a balloon, for example. The environmental information management apparatus 200 may manage environmental information obtained by a meteorological satellite.

The environmental information management apparatus 200 predicts weather based on the weather information included in the environmental information that has been obtained, for example. The environmental information management apparatus 200 predicts weather in the stratosphere, for example. The environmental information management apparatus 200 predicts weather in the troposphere, for example. The environmental information management apparatus 200 may predict weather at the tropopause.

The information processing apparatus 300 determines a flight path of the flight vehicle 100. The information processing apparatus 300, for example, determines the flight path of the flight vehicle 100 based on a result of prediction of the weather in the stratosphere received from the environmental information management apparatus 200, such that the flight vehicle 100 flies through an area in the stratosphere that has been predicted to have good weather.

The flight path of the flight vehicle 100 is, for example, a flight path taken by the flight vehicle 100 to take off from the ground and fly to the stratosphere. The flight path of the flight vehicle 100 is, for example, a flight path taken by the flight vehicle 100 to make a duration flight in the stratosphere. The flight path of the flight vehicle 100 is, for example, a flight path taken by the flight vehicle 100 to land on the ground from the stratosphere.

The information processing apparatus 300 provides flight path information indicating the flight path of the flight vehicle 100 that has been determined. The information processing apparatus 300, for example, provides the flight path information to the remote control apparatus 400. The information processing apparatus 300 may provide the flight path information to the flight vehicle 100. In this case, the control apparatus 150 may control a flight of the flight vehicle 100 such that the flight vehicle 100 autonomously flies along the flight path indicated by the flight path information.

The information processing apparatus 300 is installed on the ground, for example. The information processing apparatus 300 may be mounted on the flight vehicle 100.

The remote control apparatus 400 remotely controls the flight vehicle 100. The remote control apparatus 400 is, for example, a ground control station (GCS).

The remote control apparatus 400 has a reception unit 410, a display unit 420, an input unit 430, a generation unit 440, and a transmission unit 450. It should be noted that the remote control apparatus 400 is not necessarily required to have all of these configurations.

The reception unit 410 receives a variety of information via the network 20. The reception unit 410 receives the flight path information from the information processing apparatus 300, for example. The reception unit 410 may receive, from the flight vehicle 100, information on the position of the flight vehicle 100, or a captured image around the flight vehicle 100 captured by a camera (not shown) mounted on the flight vehicle 100.

The display unit 420 displays a variety of information. The display unit 420 displays the variety of information received by the reception unit 410, for example.

The input unit 430 accepts a control operation on the flight vehicle 100 by a pilot of the flight vehicle 100. The pilot of the flight vehicle 100 executes the control operation on the flight vehicle 100 while checking the variety of information displayed on the display unit 420, for example. The pilot of the flight vehicle 100 executes the control operation on the flight vehicle 100 such that the flight vehicle 100 flies along the flight path indicated by the flight path information, for example.

The generation unit 440 generates flight control information for controlling the flight of the flight vehicle 100. The generation unit 440 generates the flight control information based on the control operation on the flight vehicle 100 accepted by the input unit 430, for example.

The transmission unit 450 transmits the flight control information generated by the generation unit 440 to the flight vehicle 100 via the network 20. The control apparatus 150 may control the flight of the flight vehicle 100 such that the flight vehicle 100 flies in accordance with the flight control information that has been received.

The information processing apparatus 300 may have a function of the environmental information management apparatus 200. The information processing apparatus 300 may have a function of the remote control apparatus 400.

If a flight vehicle flies through an area in the stratosphere with poor weather such as a windy area, the flight vehicle is more likely to be damaged than a case where it flies through an area in the stratosphere with good weather. Therefore, in order to achieve a safe flight of the flight vehicle, it is desirable to be able to avoid the flight vehicle flying through the area in the stratosphere with poor weather.

On the other hand, according to the example shown in Fig. 1, the information processing apparatus 300 determines the flight path of the flight vehicle 100 based on the result of prediction of the weather in the stratosphere such that the flight vehicle 100 flies through an area in the stratosphere that has been predicted to have good weather. In this way, according to the example shown in Fig. 1, using the result of prediction of the weather in the stratosphere can avoid in advance the flight vehicle 100 flying through the area in the stratosphere with poor weather, making it possible to achieve a safe flight of the flight vehicle 100.

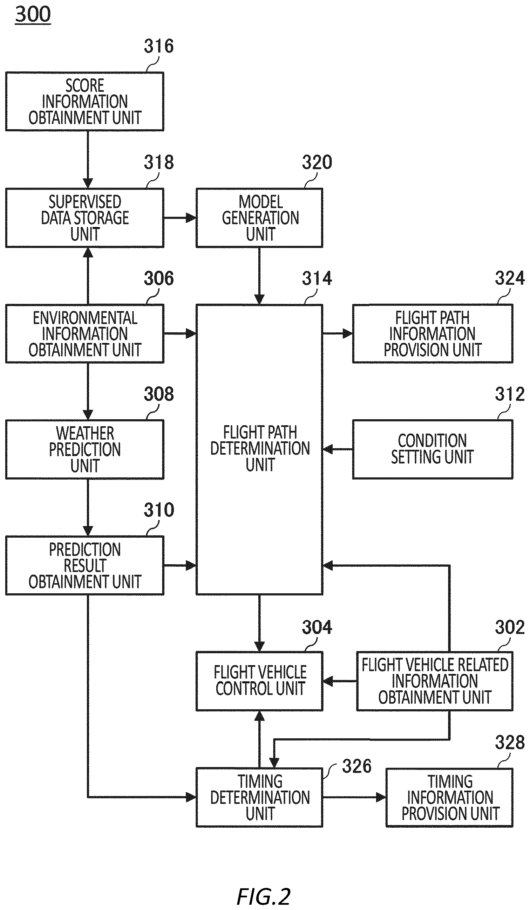

Fig. 2 schematically shows one example of a functional configuration of an information processing apparatus 300. The information processing apparatus 300 has a flight vehicle related information obtainment unit 302, a flight vehicle control unit 304, an environmental information obtainment unit 306, a weather prediction unit 308, a prediction result obtainment unit 310, a condition setting unit 312, a flight path determination unit 314, a score information obtainment unit 316, a supervised data storage unit 318, a model generation unit 320, a flight path information provision unit 324, a timing determination unit 326, and a timing information provision unit 328. It should be noted that the information processing apparatus 300 is not necessarily required to have all of these configurations.

The flight vehicle related information obtainment unit 302 obtains flight vehicle related information related to a flight vehicle 100. The flight vehicle related information obtainment unit 302 obtains the flight vehicle related information from the flight vehicle 100, for example. The flight vehicle related information obtainment unit 302 obtains the flight vehicle related information from the flight vehicle 100 by receiving the flight vehicle related information from the flight vehicle 100 via a network 20, for example.

The flight vehicle related information obtainment unit 302 obtains the flight vehicle related information by accepting an input from a user of the information processing apparatus 300 by using an input device provided in the information processing apparatus 300, for example. The flight vehicle related information obtainment unit 302 may obtain the flight vehicle related information by receiving the flight vehicle related information from a communication terminal owned by the user of the information processing apparatus 300. The user of the information processing apparatus 300 is, for example, an administrator of the flight vehicle 100.

The flight vehicle related information includes, for example, information on a position of the flight vehicle 100. The flight vehicle related information includes, for example, departure point information indicating a departure point of the flight vehicle 100. For example, if the flight vehicle 100 takes off from ground, the departure point is set in an airfield from which the flight vehicle 100 takes off. For example, if the flight vehicle 100 lands on the ground from stratosphere, the departure point is set at a flight position of the flight vehicle 100 at a given time. The flight vehicle related information includes, for example, target point information indicating a target point of the flight vehicle 100. For example, if the flight vehicle 100 takes off from the ground, the target point is set in the stratosphere above area on the ground to which the flight vehicle 100 provides a wireless communication service. For example, if the flight vehicle 100 lands on the ground from the stratosphere, the target point is set in an airfield on which the flight vehicle 100 lands. The flight vehicle related information includes, for example, provided area information indicating the area on the ground to which the flight vehicle 100 provides the wireless communication service. The flight vehicle related information includes, for example, no-fly area information indicating a no-fly area where the flight vehicle 100 is prohibited from flying. The flight vehicle related information includes a captured image around the flight vehicle 100 captured by a camera (not shown) mounted on the flight vehicle 100. The flight vehicle related information may include flight control availability information indicating whether a flight of the flight vehicle 100 can be controlled or cannot be controlled.

The flight vehicle control unit 304 controls the flight vehicle 100. The flight vehicle control unit 304 controls, for example, the flight of the flight vehicle 100. For example, the flight vehicle control unit 304 accepts a control operation on the flight vehicle 100 by a pilot of the flight vehicle 100 by using the input device provided in the information processing apparatus 300. The flight vehicle control unit 304 generates flight control information based on the control operation that has been accepted. The flight vehicle control unit 304 may generate the flight control information based on the flight vehicle related information obtained by the flight vehicle related information obtainment unit 302. The flight vehicle control unit 304 may transmit the flight control information that has been generated to the flight vehicle 100 via the network 20.

The flight control information includes, for example, flight speed control information for controlling a flight speed of the flight vehicle 100. The flight control information includes, for example, flight direction control information for controlling a flight direction of the flight vehicle 100. The flight control information includes, for example, flight altitude control information for controlling a flight altitude of the flight vehicle 100. The flight control information may include flight attitude control information for controlling a flight attitude of the flight vehicle 100.

The flight vehicle control unit 304 may control communication of the flight vehicle 100. For example, the flight vehicle control unit 304 generates communication control information for controlling the communication of the flight vehicle 100, based on the flight vehicle related information obtained by the flight vehicle related information obtainment unit 302. The flight vehicle control unit 304 may transmit the communication control information that has been generated to the flight vehicle 100 via the network 20.

The environmental information obtainment unit 306 obtains environmental information. The environmental information obtainment unit 306, for example, periodically obtains the environmental information. The environmental information obtainment unit 306 obtains the environmental information every six hours, for example.

The environmental information obtainment unit 306 obtains the environmental information from the flight vehicle 100, for example. The environmental information obtainment unit 306 obtains the environmental information from the flight vehicle 100 by receiving the environmental information from the flight vehicle 100 via the network 20, for example. The environmental information obtainment unit 306 may obtain the environmental information from an environmental information management apparatus 200 by receiving the environmental information from the environmental information management apparatus 200 via the network 20.

The environmental information obtainment unit 306 may be one example of a weather information obtainment unit. The environmental information obtainment unit 306 may be one example of an ozone concentration obtainment unit.

The weather prediction unit 308 predicts weather based on weather information included in the environmental information obtained by the environmental information obtainment unit 306. The weather prediction unit 308 predicts the weather in response to the environmental information obtainment unit 306 obtaining the weather information, for example.

The weather prediction unit 308 predicts weather in the stratosphere, for example. The weather prediction unit 308 predicts the weather in the stratosphere based on information on the weather in the stratosphere included in the weather information, for example. The weather prediction unit 308 predicts the weather in the stratosphere by using a prediction model that predicts the weather in the stratosphere based on the information on the weather in the stratosphere included in the weather information, for example.

The weather prediction unit 308 predicts, for example, weather in troposphere. The weather prediction unit 308 predicts the weather in the troposphere based on information on the weather in the troposphere included in the weather information, for example. The weather prediction unit 308 predicts the weather in the troposphere by using a prediction model that predicts the weather in the troposphere based on the information on the weather in the troposphere included in the weather information, for example.

The weather prediction unit 308 may predict weather at tropopause. The weather prediction unit 308 predicts the weather at the tropopause based on information on the weather at the tropopause included in the weather information, for example. The weather prediction unit 308 predicts the weather at the tropopause by using a prediction model that predicts the weather at the tropopause based on the information on the weather at the tropopause included in the weather information, for example. The weather prediction unit 308 may predict the weather at the tropopause based on the information on the weather in the stratosphere and the information on the weather in the troposphere that are included in the weather information. The weather prediction unit 308 predicts the weather at the tropopause by using a prediction model that predicts the weather at the tropopause based on the information on the weather in the stratosphere and the information on the weather in the troposphere that are included in the weather information, for example.

The weather prediction unit 308 predicts, for example, a wind speed. The weather prediction unit 308 predicts, for example, a wind direction. The weather prediction unit 308 predicts, for example, a cloud amount. The weather prediction unit 308 predicts, for example, a rainfall amount. The weather prediction unit 308 predicts, for example, a snowfall amount. The weather prediction unit 308 predicts, for example, a temperature. The weather prediction unit 308 predicts, for example, an atmospheric pressure. The weather prediction unit 308 predicts, for example, solar radiation intensity. The weather prediction unit 308 may predict predicted ultraviolet intensity.

The prediction result obtainment unit 310 obtains a result of prediction of the weather. The prediction result obtainment unit 310 obtains the result of prediction of the weather predicted by the weather prediction unit 308, for example. The prediction result obtainment unit 310 may obtain the result of prediction of the weather predicted by the environmental information management apparatus 200, by receiving the result of prediction of the weather from the environmental information management apparatus 200 via the network 20.

The condition setting unit 312 sets various conditions. The condition setting unit 312 sets the various conditions by accepting the input from the user of the information processing apparatus 300 by using the input device provided in the information processing apparatus 300, for example. The condition setting unit 312 may set the various conditions by receiving the various conditions from the communication terminal owned by the user of the information processing apparatus 300.

The condition setting unit 312 sets a path condition that is a condition for determining a flight path along which the flight vehicle 100 flies, for example. The path condition includes, for example, a stratospheric path condition that is a condition for determining a flight path along which the flight vehicle 100 flies in the stratosphere. The path condition includes, for example, a tropospheric path condition that is a condition for determining a flight path along which the flight vehicle 100 flies in the troposphere. The tropospheric path condition is, for example, a condition different from the stratospheric path condition. The tropospheric path condition may be the same condition as the stratospheric path condition. The path condition may include a tropopause path condition that is a condition for determining a flight path along which the flight vehicle 100 flies at the tropopause. The tropopause path condition is, for example, a condition different from the stratospheric path condition and the tropospheric path condition. The tropospheric path condition may be the same condition as at least one of the stratospheric path condition or the tropospheric path condition.

The path condition includes, for example, that the result of prediction of the weather obtained by the prediction result obtainment unit 310 satisfies a predetermined weather condition. The weather condition includes, for example, that a predicted wind speed included in the result of prediction of the weather is lower than a predetermined wind speed threshold. The wind speed threshold is set to a wind speed for a case where a jet stream is generated, for example. The weather condition includes, for example, that a predicted cloud amount is lower than a predetermined cloud amount threshold. The cloud amount threshold is set to a cloud amount for a case where the weather is clear, for example. The weather condition includes, for example, that a predicted rainfall amount is lower than a predetermined rainfall amount threshold. The weather condition includes, for example, that a predicted snowfall amount is lower than a predetermined snowfall amount threshold. The weather condition includes, for example, that a predicted temperature is higher than a predetermined temperature threshold. The temperature threshold is set to a temperature that does not affect operation of the flight vehicle 100, for example. The temperature threshold may be set to a temperature that does not affect operation of a battery mounted on the flight vehicle 100. The weather condition includes, for example, that predicted humidity is lower than a predetermined humidity threshold. The weather condition includes, for example, that predicted solar radiation intensity is higher than a predetermined solar radiation intensity threshold. The weather condition includes, for example, that predicted ultraviolet intensity is lower than a predetermined ultraviolet intensity threshold. The ultraviolet intensity threshold is set such that a rate of deterioration of an airframe of the flight vehicle 100 is slower than a predetermined rate of deterioration, for example.

The path condition may include that ozone concentration information indicating an ozone concentration included in the environmental information obtained by the environmental information obtainment unit 306 is higher than a predetermined ozone concentration threshold. The ozone concentration threshold is set such that the rate of deterioration of the airframe of the flight vehicle 100 is slower than the predetermined rate of deterioration, for example.

A threshold value included in the tropospheric path condition is, for example, a threshold value different from a threshold value included in the stratospheric path condition. The threshold value included in the tropospheric path condition may be the same threshold value as the threshold value included in the stratospheric path condition. A threshold value included in the tropopause path condition is, for example, a threshold value different from the threshold value included in the stratospheric path condition and the threshold value included in the tropospheric path condition. The threshold value included in the tropospheric path condition may be the same threshold value as at least one of the threshold value included in the stratospheric path condition or the threshold value included in the tropospheric path condition.

The condition setting unit 312 may set different path conditions depending on a time of year when the flight vehicle 100 flies. The condition setting unit 312 may set different path conditions depending on a time of day when the flight vehicle 100 flies.

The flight path determination unit 314 determines the flight path along which the flight vehicle 100 flies. The flight path determination unit 314 determines the flight path of the flight vehicle 100 based on the flight vehicle related information obtained by the flight vehicle related information obtainment unit 302, for example.

The flight path determination unit 314 determines the flight path of the flight vehicle 100 such that the flight vehicle 100 flies from the departure point of the flight vehicle 100 indicated by the departure point information included in the flight vehicle related information to the target point of the flight vehicle 100 indicated by the target point information included in the flight vehicle related information, for example. The flight path determination unit 314 determines the flight path of the flight vehicle 100 such that the flight vehicle 100 makes a duration flight in the stratosphere in order to provide the wireless communication service to the area on the ground indicated by the provided area information included in the flight vehicle related information, for example. The flight path determination unit 314 may determine the flight path of the flight vehicle 100 such that the flight vehicle 100 does not fly through the no-fly area indicated by the no-fly area information included in the flight vehicle related information.

The flight path determination unit 314 determines the flight path of the flight vehicle 100 based on the result of prediction of the weather obtained by the prediction result obtainment unit 310, for example. The flight path determination unit 314, for example, determines the flight path of the flight vehicle 100 based on a result of prediction of the weather in the stratosphere such that the flight vehicle 100 flies through an area in the stratosphere that has been predicted to satisfy the stratospheric path condition. The flight path determination unit 314, for example, determines the flight path of the flight vehicle 100 based further on a result of prediction of the weather in the troposphere such that the flight vehicle 100 further flies through an area in the troposphere that has been predicted to satisfy the tropospheric path condition. The flight path determination unit 314 determines the flight path of the flight vehicle 100 based further on a result of prediction of the weather at the tropopause such that the flight vehicle 100 further flies through an area at the tropopause that has been predicted to satisfy the tropopause path condition. The flight vehicle control unit 304 may control the flight of the flight vehicle 100 such that the flight vehicle 100 flies along the flight path determined by the flight path determination unit 314.

The flight path determination unit 314 may change the flight path that has been determined. For example, if a path portion, out of the flight path that has been determined, included in an area within a predetermined range from the position of the flight vehicle 100 indicated by the position information included in the flight vehicle related information obtained by the flight vehicle related information obtainment unit 302 does not satisfy the path condition any longer, the flight path determination unit 314 changes the flight path. The flight path determination unit 314 may change the flight path in a similar manner to when determining the flight path.

The score information obtainment unit 316 obtains score information indicating a score for the flight path determined by the flight path determination unit 314. The score information obtainment unit 316 obtains the score information by accepting the input from the user of the information processing apparatus 300 by using the input device provided in the information processing apparatus 300, for example. The score information obtainment unit 316 may obtain the score information by receiving the score information from the communication terminal owned by the user of the information processing apparatus 300.

The user of the information processing apparatus 300 registers the score for the flight path based on information on weather along the flight path when the flight vehicle 100 has flown along the flight path, the information being included in the weather information obtained by the environmental information obtainment unit 306, for example. The user of the information processing apparatus 300 may register the score for the flight path based on a captured image captured by the camera mounted on the flight vehicle 100 when the flight vehicle 100 has flown along the flight path, the image being included in the flight vehicle related information obtained by the flight vehicle related information obtainment unit 302. For example, the better the weather along the flight path when the flight vehicle 100 has flown along the flight path is, the higher score the user of the information processing apparatus 300 registers for the flight path.

The supervised data storage unit 318 stores supervised data. The supervised data storage unit 318, for example, associates and stores: flight path information indicating the flight path determined by the flight path determination unit 314; the information on the weather along the flight path when the flight vehicle 100 has flown along the flight path, the information being included in the environmental information obtained by the environmental information obtainment unit 306; and the score information indicating the score for the flight path obtained by the score information obtainment unit 316.

The flight path to be stored in the supervised data storage unit 318 includes, for example, a flight path for a flight through the area in the stratosphere that has been predicted to satisfy the stratospheric path condition. The flight path to be stored in the supervised data storage unit 318 includes, for example, a flight path for a flight through the area in the stratosphere that has been predicted to satisfy the stratospheric path condition and the area in the troposphere that has been predicted to satisfy the tropospheric path condition. The flight path to be stored in the supervised data storage unit 318 includes, for example, a flight path for a flight through the area in the stratosphere that has been predicted to satisfy the stratospheric path condition, the area in the troposphere that has been predicted to satisfy the tropospheric path condition, and the area at the tropopause that has been predicted to satisfy the tropopause path condition.

The model generation unit 320 generates, by machine learning, an estimation model that estimates the score for the flight path, by using, as supervised data, a plurality of pieces of flight path information, the information on the weather along the flight path when the flight vehicle 100 has flown along the flight path, and the information on the score for the flight path that are stored in the supervised data storage unit 318, from the result of prediction of the weather in the stratosphere obtained by the prediction result obtainment unit 310 and from the flight path for the flight through the area in the stratosphere that has been predicted to satisfy the stratospheric path condition. The model generation unit 320, for example, generates, by machine learning, the estimation model that estimates the score for the flight path, by using, as the supervised data, the plurality of pieces of flight path information, the information on the weather along the flight path when the flight vehicle 100 has flown along the flight path, and the information on the score for the flight path that are stored in the supervised data storage unit 318, from the result of prediction of the weather in the stratosphere and the result of prediction of the weather in the troposphere that are obtained by the prediction result obtainment unit 310 and from the flight path for the flight through the area in the stratosphere that has been predicted to satisfy the stratospheric path condition and the area in the troposphere that has been predicted to satisfy the tropospheric path condition. The model generation unit 320, for example, generates, by machine learning, the estimation model that estimates the score for the flight path, by using, as the supervised data, the plurality of pieces of flight path information, the information on the weather along the flight path when the flight vehicle 100 has flown along the flight path, and the information on the score for the flight path that are stored in the supervised data storage unit 318, from the result of prediction of the weather in the stratosphere, the result of prediction of the weather in the troposphere, and the result of prediction of the weather at the tropopause that are obtained by the prediction result obtainment unit 310 and from the flight path for the flight through the area in the stratosphere that has been predicted to satisfy the stratospheric path condition, the area in the troposphere that has been predicted to satisfy the tropospheric path condition, and the area at the tropopause that has been predicted to satisfy the tropopause path condition.

The flight path determination unit 314 estimates the score for the flight path by using the estimation model generated by the model generation unit 320, from the result of prediction of the weather in the stratosphere and from the flight path for the flight through the area in the stratosphere that has been predicted to satisfy the stratospheric path condition, for example. The flight path determination unit 314 estimates the score for the flight path by using the estimation model generated by the model generation unit 320, from the result of prediction of the weather in the stratosphere and the result of prediction of the weather in the troposphere and from the flight path for the flight through the area in the stratosphere that has been predicted to satisfy the stratospheric path condition and the area in the troposphere that has been predicted to satisfy the tropospheric path condition, for example. The flight path determination unit 314 may estimate the score for the flight path by using the estimation model generated by the model generation unit 320, from the result of prediction of the weather in the stratosphere, the result of prediction of the weather in the troposphere, and the result of prediction of the weather at the tropopause and from the flight path for the flight through the area in the stratosphere that has been predicted to satisfy the stratospheric path condition, the area in the troposphere that has been predicted to satisfy the tropospheric path condition, and the area at the tropopause that has been predicted to satisfy the tropopause path condition, for example.

The condition setting unit 312 may set a priority level condition that is a condition for setting a priority level of the flight path. The flight path of which the priority level is to be set includes, for example, the flight path for the flight through the area in the stratosphere that has been predicted to satisfy the stratospheric path condition. The flight path of which the priority level is to be set includes, for example, the flight path for the flight through the area in the stratosphere that has been predicted to satisfy the stratospheric path condition and the area in the troposphere that has been predicted to satisfy the tropospheric path condition. The flight path of which the priority level is to be set includes, for example, the flight path for the flight through the area in the stratosphere that has been predicted to satisfy the stratospheric path condition, the area in the troposphere that has been predicted to satisfy the tropospheric path condition, and the area at the tropopause that has been predicted to satisfy the tropopause path condition.

The priority level condition includes, for example, that a priority level of a flight path with a shorter flight distance that the flight vehicle 100 flies to the target point is set higher. The priority level condition includes, for example, that a priority level of a flight path with a shorter flight time required for the flight vehicle 100 to fly to the target point is set higher. The priority level condition includes, for example, that a priority level of a flight path with less electrical power required for the flight vehicle 100 to fly to the target point is set higher. The priority level condition includes, for example, that a priority level of a flight path with a lower predicted wind speed at the tropopause is set higher. The priority level condition may include that a priority level of a flight path with a higher score is set higher.

The condition setting unit 312 may set a plurality of priority level conditions. In this case, the condition setting unit 312 may set a weight for each of the plurality of priority level conditions.

The flight path determination unit 314, for example, determines the flight path of the flight vehicle 100 by setting, based on the priority level condition set by the condition setting unit 312, priority levels on flight paths for the flight through the area in the stratosphere that has been predicted to satisfy the stratospheric path condition and by prioritizing a flight path with a high priority level among the flight paths as the flight path of the flight vehicle 100. The flight path determination unit 314, for example, determines the flight path of the flight vehicle 100 by setting, based on the priority level condition set by the condition setting unit 312, priority levels on flight paths for the flight through the area in the stratosphere that has been predicted to satisfy the stratospheric path condition and the area in the troposphere that has been predicted to satisfy the tropospheric path condition and by prioritizing a flight path with a high priority level among the flight paths as the flight path of the flight vehicle 100. The flight path determination unit 314, for example, determines the flight path of the flight vehicle 100 by setting, based on the priority level condition set by the condition setting unit 312, priority levels on flight paths for the flight through the area in the stratosphere that has been predicted to satisfy the stratospheric path condition, the area in the troposphere that has been predicted to satisfy the tropospheric path condition, and the area at the tropopause that has been predicted to satisfy the tropopause path condition and by prioritizing a flight path with a high priority level among the flight paths as the flight path of the flight vehicle 100.

The flight path determination unit 314 may determine, based on the departure point of the flight vehicle 100 indicated by the departure point information and the target point of the flight vehicle 100 indicated by the target point information that are included in the flight vehicle related information obtained by the flight vehicle related information obtainment unit 302, at least one of a flight distance that the flight vehicle 100 flies to the target point, a flight time required for the flight vehicle 100 to fly to the target point, or electrical power required for the flight vehicle 100 to fly to the target point. The flight path determination unit 314 may determine, based further on a result of prediction of the weather along the flight path obtained by the prediction result obtainment unit 310, at least one of the flight distance that the flight vehicle 100 flies to the target point, the flight time required for the flight vehicle 100 to fly to the target point, or the electrical power required for the flight vehicle 100 to fly to the target point.

The flight path information provision unit 324 provides the flight path information indicating the flight path determined by the flight path determination unit 314. The flight path information provision unit 324, for example, provides the flight path information to the remote control apparatus 400. The flight path information provision unit 324 may provide the flight path information to the flight vehicle 100.

The flight path information indicates, for example, one flight path determined by the flight path determination unit 314. The flight path information indicates, for example, a flight path with the highest priority level. The flight path information may indicate a plurality of flight paths determined by the flight path determination unit 314. The flight path information indicates, for example, a predetermined number of flight paths with high priority levels. The flight path information may indicate a flight path with a priority level higher than a predetermined priority level threshold.

The flight path information includes, for example, flight distance information indicating the flight distance that the flight vehicle 100 flies to the target point. The flight path information includes, for example, flight time information indicating the flight time required for the flight vehicle 100 to fly to the target point. The flight path information may include electrical power information indicating the electrical power required for the flight vehicle 100 to fly to the target point.

The timing determination unit 326 determines timing when a parachute mounted on the flight vehicle 100 is to be opened. For example, if the flight control availability information included in the flight vehicle related information obtained by the flight vehicle related information obtainment unit 302 indicates that the flight of the flight vehicle 100 cannot be controlled, the timing determination unit 326 determines the timing when the parachute is to be opened.

The timing determination unit 326 determines the timing when the parachute is to be opened, based on a flight position of the flight vehicle 100 indicated by flight position information included in the flight vehicle related information obtained by the flight vehicle related information obtainment unit 302 and on the result of prediction of the weather in the stratosphere and the result of prediction of the weather in the troposphere that are obtained by the prediction result obtainment unit 310, for example. The timing determination unit 326 determines the timing when the parachute is to be opened, by predicting an area into which the flight vehicle 100 falls if the parachute is opened, based on the flight position of the flight vehicle 100 and on the result of prediction of the weather in the stratosphere and the result of prediction of the weather in the troposphere, for example. The timing determination unit 326 determines that the parachute is to be opened at timing when the flight vehicle 100 is predicted to fall into an area where there is nobody, for example. The timing determination unit 326 determines that the parachute is to be opened at timing when the flight vehicle 100 is predicted to fall into an ocean area, for example. The flight vehicle control unit 304 may control the flight vehicle 100 to open the parachute at timing determined by the timing determination unit 326.

The timing information provision unit 328 provides timing information indicating the timing when the parachute mounted on the flight vehicle 100 is to be opened that has been determined by the timing determination unit 326. The timing information provision unit 328, for example, provides the timing information to the remote control apparatus 400. The remote control apparatus 400 remotely controls the flight vehicle 100 to open the parachute at the timing indicated by the timing information. The timing information provision unit 328 may provide the timing information to the flight vehicle 100. A control apparatus 150 may control the flight of the flight vehicle 100 such that the parachute is to be opened at the timing indicated by the timing information.

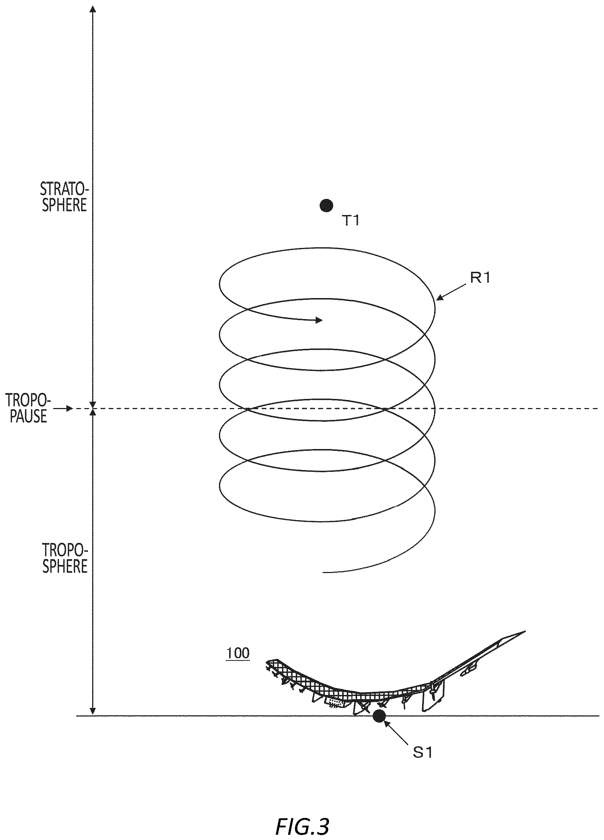

Fig. 3 is an explanatory diagram for describing one example in which an information processing apparatus 300 determines a flight path of a flight vehicle 100. Fig. 3 mainly describes one example in which the information processing apparatus 300 flies the flight path of the flight vehicle 100 if the flight vehicle 100 takes off.

Before the flight vehicle 100 starts takeoff, a flight path determination unit 314 determines a flight path R1 along which the flight vehicle 100 takes off from a departure point S1 on ground and flies to a target point T1 in stratosphere. The flight path of the flight vehicle 100 for a case where the flight vehicle 100 takes off is, for example, a spiral flight path along which the flight vehicle 100 increases in altitude while rotating in a plane perpendicular to an altitude direction.

The flight path determination unit 314 determines the flight path R1 by determining a position of a rotational axis, for example. The flight path determination unit 314 determines the flight path R1 by determining a distance between the flight vehicle 100 and the rotational axis, for example. The flight path determination unit 314 determines the flight path R1 by determining a direction of rotation, for example. The flight path determination unit 314 determines the flight path R1 by determining an ascent speed, for example.

The flight path determination unit 314, for example, determines the flight path R1 based on a result of prediction of weather in the stratosphere and a result of prediction of weather in troposphere that are obtained by a prediction result obtainment unit 310, such that the flight vehicle 100 flies through an area in the stratosphere that has been predicted to satisfy a stratospheric path condition and an area in the troposphere that has been predicted to satisfy a tropospheric path condition. The flight path determination unit 314 determines the flight path R1 such that the flight vehicle 100 flies through an area in the stratosphere where a predicted wind speed in the stratosphere is lower than a stratospheric wind speed threshold and flies through an area in the troposphere where a predicted wind speed in the troposphere is lower than a tropospheric wind speed threshold, for example. The flight path determination unit 314 determines the flight path R1 such that the flight vehicle 100 flies through an area in the stratosphere where a predicted cloud amount in the stratosphere is lower than a stratospheric cloud amount threshold and flies through an area in the troposphere where a predicted cloud amount in the troposphere is lower than a tropospheric cloud amount threshold, for example. The flight path determination unit 314 may determine the flight path R1 such that the flight vehicle 100 flies through an area in the stratosphere where a predicted temperature in the stratosphere is higher than a stratospheric temperature threshold and flies through an area in the troposphere where a predicted temperature in the troposphere is higher than a tropospheric temperature threshold.

The flight path determination unit 314, for example, determines the flight path R1 based further on a result of prediction of weather at tropopause obtained by the prediction result obtainment unit 310, such that the flight vehicle 100 flies through the area in the stratosphere that has been predicted to satisfy the stratospheric path condition, the area in the troposphere that has been predicted to satisfy the tropospheric path condition, and an area at the tropopause that has been predicted to satisfy a tropopause path condition. The flight path determination unit 314 determines the flight path R1 such that the flight vehicle 100 flies through the area in the stratosphere where the predicted wind speed in the stratosphere is lower than the stratospheric wind speed threshold, flies through the area in the troposphere where the predicted wind speed in the troposphere is lower than the tropospheric wind speed threshold, and flies through an area at the tropopause where a predicted wind speed at the tropopause is lower than a tropopause wind speed threshold, for example.

The flight path determination unit 314, for example, determines the flight path R1 by setting, based on a priority level condition set by a condition setting unit 312, priority levels on flight paths for a flight through the area in the stratosphere that has been predicted to satisfy the stratospheric path condition and the area in the troposphere that has been predicted to satisfy the tropospheric path condition and by prioritizing a flight path with a high priority level among the flight paths as the flight path R1. The flight path determination unit 314, for example, determines the flight path R1 by setting, based on the priority level condition set by the condition setting unit 312, priority levels on flight paths for a flight through the area in the stratosphere that has been predicted to satisfy the stratospheric path condition, the area in the troposphere that has been predicted to satisfy the tropospheric path condition, and the area at the tropopause that has been predicted to satisfy the tropopause path condition and by prioritizing a flight path with a high priority level among the flight paths as the flight path R1.

The flight path information provision unit 324, for example, provides flight path information indicating the flight path R1 determined by the flight path determination unit 314, to a remote control apparatus 400. The remote control apparatus 400 remotely controls the flight vehicle 100 such that the flight vehicle 100 flies along the flight path R1.

The flight path determination unit 314 may change the flight path R1 while the flight vehicle 100 is flying along the flight path R1. The flight path determination unit 314 changes the flight path R1 by changing the position of the rotational axis, for example. The flight path determination unit 314 changes the flight path R1 by changing the distance between the flight vehicle 100 and the rotational axis, for example. The flight path determination unit 314 may change the flight path R1 by changing the ascent speed, for example. The flight path information provision unit 324 may provide the flight path changed by the flight path determination unit 314 to the remote control apparatus 400.

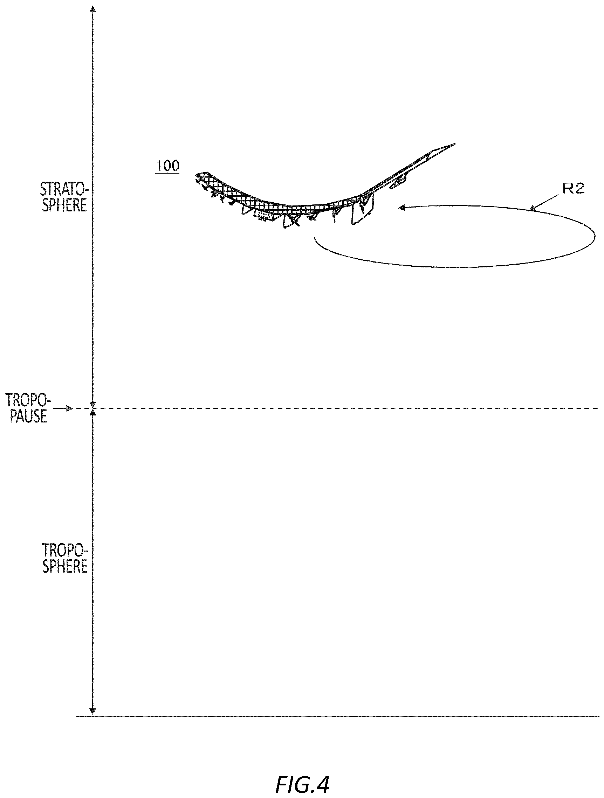

Fig. 4 is an explanatory diagram for describing another example in which an information processing apparatus 300 determines a flight path of a flight vehicle 100. Fig. 4 mainly describes one example in which the information processing apparatus 300 flies the flight path of the flight vehicle 100 if the flight vehicle 100 makes a duration flight in stratosphere.

Before the flight vehicle 100 starts the duration flight in the stratosphere, a flight path determination unit 314 determines a flight path R2 along which the flight vehicle 100 makes the duration flight in the stratosphere. The flight path for a case where the flight vehicle 100 makes the duration flight in the stratosphere is, for example, a flight path along which the flight vehicle 100 makes the duration flight in a circular trajectory. The flight path for a case where the flight vehicle 100 makes the duration flight in the stratosphere is, for example, a flight path along which the flight vehicle 100 makes the duration flight in an elliptical trajectory. The flight path for a case where the flight vehicle 100 makes the duration flight in the stratosphere is, for example, a flight path along which the flight vehicle 100 makes the duration flight in a D-shaped trajectory. The flight path for a case where the flight vehicle 100 makes the duration flight in the stratosphere may be a flight path along which the flight vehicle 100 makes the duration flight in a figure-of-eight trajectory.

The flight path determination unit 314 determines the flight path R2 by determining geometry of a trajectory followed by the flight vehicle 100 in making the duration flight in the stratosphere, for example. The flight path determination unit 314 determines the flight path R2 by determining a central position of the trajectory followed by the flight vehicle 100 in making the duration flight in the stratosphere, for example. The flight path determination unit 314 determines the flight path R2 by determining a size of the trajectory followed by the flight vehicle 100 in making the duration flight in the stratosphere, for example. The flight path determination unit 314 may determine the flight path R2 by determining a direction of the trajectory followed by the flight vehicle 100 in making the duration flight in the stratosphere.

The flight path determination unit 314, for example, determines a flight path R3 based on a result of prediction of weather in the stratosphere obtained by a prediction result obtainment unit 310, such that the flight vehicle 100 makes the duration flight through an area in the stratosphere that has been predicted to satisfy a stratospheric path condition. The flight path determination unit 314, for example, determines the flight path R2 based on a predicted temperature in the stratosphere included in the result of prediction of the weather in the stratosphere, such that the flight vehicle 100 makes the duration flight through an area in the stratosphere where the predicted temperature in the stratosphere is higher than a stratospheric temperature threshold. The flight path determination unit 314, for example, determines the flight path R2 based on a predicted wind speed and a predicted wind direction in the stratosphere included in the result of prediction of the weather in the stratosphere, such that a shift in a wireless communication area 142 caused by wind in the stratosphere is reduced. The flight path determination unit 314 may determine the flight path R2 such that the flight vehicle 100 makes the duration flight through an area in the stratosphere where an ozone concentration in the stratosphere indicated by ozone concentration information included in information on an environment of the stratosphere obtained by an environmental information obtainment unit 306 is higher an ozone concentration threshold.

A flight path information provision unit 324, for example, provides flight path information indicating the flight path R2 determined by the flight path determination unit 314, to the flight vehicle 100. A control apparatus 150 controls a flight of the flight vehicle 100 such that the flight vehicle 100 autonomously flies along the flight path R2.

The flight path determination unit 314 may change the flight path R2 while the flight vehicle 100 is making the duration flight along the flight path R2. The flight path determination unit 314 changes the flight path R2 by changing the geometry of the trajectory followed by the flight vehicle 100 in making the duration flight in the stratosphere, for example. The flight path determination unit 314 changes the flight path R2 by changing the central position of the trajectory followed by the flight vehicle 100 in making the duration flight in the stratosphere, for example. The flight path determination unit 314 changes the flight path R2 by changing the size of the trajectory followed by the flight vehicle 100 in making the duration flight in the stratosphere, for example. The flight path determination unit 314 may change the flight path R2 by changing the direction of the trajectory followed by the flight vehicle 100 in making the duration flight in the stratosphere. The flight path information provision unit 324 may provide the flight path changed by the flight path determination unit 314 to the flight vehicle 100.

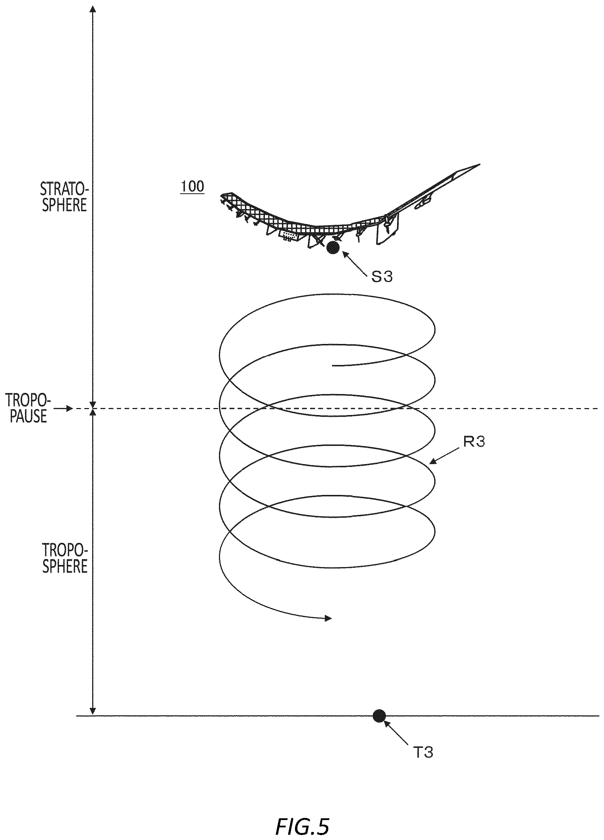

Fig. 5 is an explanatory diagram for describing another example in which an information processing apparatus 300 determines a flight path of a flight vehicle 100. Fig. 5 mainly describes one example in which the information processing apparatus 300 determines the flight path of the flight vehicle 100 if the flight vehicle 100 lands.

Before the flight vehicle 100 starts landing, a flight path determination unit 314 determines a flight path R3 to be taken by the flight vehicle 100 from when it departs from a departure point S3 in stratosphere to when it lands at a target point T3 on ground. The flight path of the flight vehicle 100 for a case where the flight vehicle 100 lands is, for example, a spiral flight path along which the flight vehicle 100 decreases in altitude while rotating in a plane perpendicular to an altitude direction. The flight path of the flight vehicle 100 for a case where the flight vehicle 100 lands may be a flight path along which the flight vehicle 100 glides. The flight path determination unit 314 may determine, based on a result of prediction of weather in the stratosphere and a result of prediction of weather in troposphere that are obtained by a prediction result obtainment unit 310, whether the flight path of the flight vehicle 100 for a case where the flight vehicle 100 lands is to be the spiral flight path or the flight path for a glide. Here, description will be continued assuming that the flight path determination unit 314 has determined that the flight path of the flight vehicle 100 for a case where the flight vehicle 100 lands is to be the spiral flight path.

The flight path determination unit 314 determines the flight path R3 by determining a position of a rotational axis, for example. The flight path determination unit 314 determines the flight path R3 by determining a distance between the flight vehicle 100 and the rotational axis, for example. The flight path determination unit 314 determines the flight path R3 by determining a direction of rotation, for example. The flight path determination unit 314 determines the flight path R3 by determining a descent speed, for example.

The flight path determination unit 314, for example, determines the flight path R3 based on the result of prediction of the weather in the stratosphere and the result of prediction of the weather in the troposphere that are obtained by the prediction result obtainment unit 310, such that the flight vehicle 100 flies through an area in the stratosphere that has been predicted to satisfy a stratospheric path condition and an area in the troposphere that has been predicted to satisfy a tropospheric path condition. The flight path determination unit 314 determines the flight path R3 such that the flight vehicle 100 flies through an area in the stratosphere where a predicted wind speed in the stratosphere is lower than a stratospheric wind speed threshold and flies through an area in the troposphere where a predicted wind speed in the troposphere is lower than a tropospheric wind speed threshold, for example. The flight path determination unit 314 determines the flight path R3 such that the flight vehicle 100 flies through an area in the stratosphere where a predicted cloud amount in the stratosphere is lower than a stratospheric cloud amount threshold and flies through an area in the troposphere where a predicted cloud amount in the troposphere is lower than a tropospheric cloud amount threshold, for example. The flight path determination unit 314 may determine the flight path R3 such that the flight vehicle 100 flies through an area in the stratosphere where a predicted temperature in the stratosphere is higher than a stratospheric temperature threshold and flies through an area in the troposphere where a predicted temperature in the troposphere is higher than a tropospheric temperature threshold.

The flight path determination unit 314, for example, determines the flight path R3 based further on a result of prediction of weather at tropopause obtained by the prediction result obtainment unit 310, such that the flight vehicle 100 flies through the area in the stratosphere that has been predicted to satisfy the stratospheric path condition, the area in the troposphere that has been predicted to satisfy the tropospheric path condition, and an area at the tropopause that has been predicted to satisfy a tropopause path condition. The flight path determination unit 314 determines the flight path R3 such that the flight vehicle 100 flies through the area in the stratosphere where the predicted wind speed in the stratosphere is lower than the stratospheric wind speed threshold, flies through the area in the troposphere where the predicted wind speed in the troposphere is lower than the tropospheric wind speed threshold, and flies through an area at the tropopause where a predicted wind speed at the tropopause is lower than a tropopause wind speed threshold, for example.

The flight path determination unit 314 determines the flight path R3 by setting, based on a priority level condition set by a condition setting unit 312, priority levels on flight paths for a flight through the area in the stratosphere that has been predicted to satisfy the stratospheric path condition and the area in the troposphere that has been predicted to satisfy the tropospheric path condition and by prioritizing a flight path with a high priority level among the flight paths as the flight path R3. The flight path determination unit 314, for example, determines the flight path R3 by setting, based on the priority level condition set by the condition setting unit 312, priority levels on flight paths for a flight through the area in the stratosphere that has been predicted to satisfy the stratospheric path condition, the area in the troposphere that has been predicted to satisfy the tropospheric path condition, and the area at the tropopause that has been predicted to satisfy the tropopause path condition and by prioritizing a flight path with a high priority level among the flight paths as the flight path R3.

The flight path information provision unit 324, for example, provides flight path information indicating the flight path R3 determined by the flight path determination unit 314, to a remote control apparatus 400. The remote control apparatus 400 remotely controls the flight vehicle 100 such that the flight vehicle 100 flies along the flight path R3.

The flight path determination unit 314 may change the flight path R3 while the flight vehicle 100 is flying along the flight path R3. The flight path determination unit 314 changes the flight path R3 by changing the position of the rotational axis, for example. The flight path determination unit 314 changes the flight path R3 by changing the distance between the flight vehicle 100 and the rotational axis, for example. The flight path determination unit 314 may change the flight path R3 by changing the descent speed, for example. The flight path information provision unit 324 may provide the flight path changed by the flight path determination unit 314 to the remote control apparatus 400.

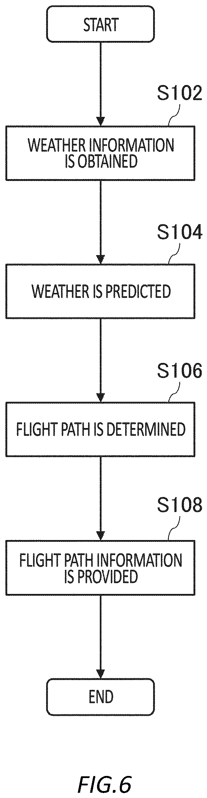

Fig. 6 is an explanatory diagram for describing one example of a flow of processing by an information processing apparatus 300. Fig. 6 mainly describes one example of the flow of the processing by the information processing apparatus 300 from when an environmental information obtainment unit 306 obtains weather information to when a flight path information provision unit 324 provides flight path information to a remote control apparatus 400.

In a step (step may be abbreviated as S) 102, the environmental information obtainment unit 306 obtains information on weather in stratosphere. In S104, a weather prediction unit 308 predicts the weather in the stratosphere based on the information on the weather in the stratosphere obtained by the environmental information obtainment unit 306 in S102.

In S106, a flight path determination unit 314 determines a flight path of a flight vehicle 100 based on a result of prediction of the weather in the stratosphere predicted by a prediction result obtainment unit 310 in S104, such that the flight vehicle 100 flies through an area in the stratosphere that has been predicted to satisfy a stratospheric path condition.

In S108, the flight path information provision unit 324 provides the flight path information indicating the flight path of the flight vehicle 100 determined by the flight path determination unit 314 in S108, to the remote control apparatus 400. The flight path information provision unit 324 may provide the flight path information to the flight vehicle 100. Then, the processing ends.

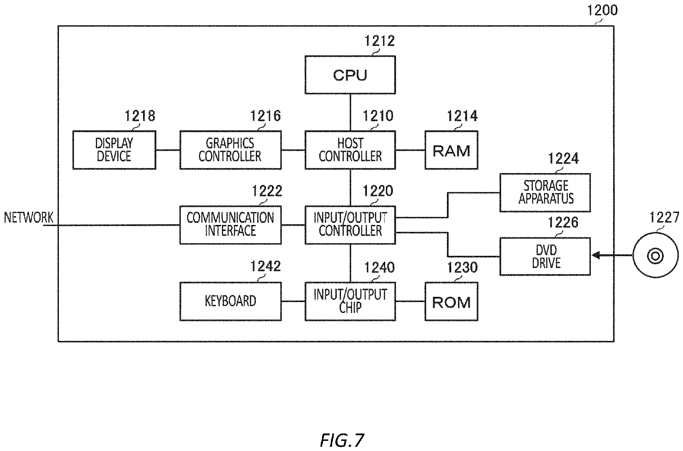

Fig. 7 schematically shows one example of a hardware configuration of a computer 1200 which functions as an information processing apparatus 300. Programs installed in the computer 1200 can cause the computer 1200 to function as one or more "units" of the apparatus according to the embodiment described above or can cause the computer 1200 to execute operations associated with the apparatuses according to the embodiment described above or the one or more "units", and/or can cause the computer 1200 to execute a process according to the embodiment described above or stages of the process. Such a program may be executed by a CPU 1212 to cause the computer 1200 to execute specific operations associated with some or all of the blocks in the flowcharts and block diagrams described in the present specification.

The computer 1200 according to the present embodiment includes the CPU 1212, a RAM 1214, and a graphics controller 1216, which are connected to each other via a host controller 1210. The computer 1200 also includes input/output units such as a communication interface 1222, a storage apparatus 1224, a DVD drive 1226 and an IC card drive, which are connected to the host controller 1210 via an input/output controller 1220. The DVD drive 1226 may be a DVD-ROM drive, a DVD-RAM drive, and the like. The storage apparatus 1224 may be a hard disk drive, a solid-state drive, and the like. The computer 1200 also includes legacy input/output units such as a ROM 1230 and a keyboard 1242, which are connected to the input/output controller 1220 via an input/output chip 1240.

The CPU 1212 operates in accordance with the programs stored in the ROM 1230 and the RAM 1214, thereby controlling each unit. The graphics controller 1216 obtains image data which is generated by the CPU 1212 in a frame buffer or the like provided in the RAM 1214 or in itself so as to cause the image data to be displayed on a display device 1218.

The communication interface 1222 communicates with another electronic device via a network. The storage apparatus 1224 stores a program and data used by the CPU 1212 in the computer 1200. The DVD drive 1226 reads the programs or the data from the DVD-ROM 1227 or the like, and provides the storage apparatus 1224 with the programs or the data. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer readable storage medium such as a DVD-ROM 1227 or an IC card. The program is read from the computer readable storage medium, installed into the storage apparatus 1224, RAM 1214, or ROM 1230, which are also examples of a computer readable storage medium, and executed by the CPU 1212. Information processing described in these programs is read by the computer 1200, and provides cooperation between the programs and the various types of hardware resources described above. An apparatus or method may be configured by achieving the operation or processing of information in accordance with the usage of the computer 1200.

For example, in a case where a communication is executed between the computer 1200 and an external device, the CPU 1212 may execute a communication program loaded in the RAM 1214 and instruct the communication interface 1222 to execute communication processing based on a process described in the communication program. The communication interface 1222, under control of the CPU 1212, reads transmission data stored on a transmission buffer region provided in a recording medium such as the RAM 1214, the storage apparatus 1224, the DVD-ROM 1227, or the IC card, and transmits the read transmission data to a network or writes reception data received from a network to a reception buffer region or the like provided on the recording medium.

In addition, the CPU 1212 may cause all or a necessary portion of a file or a database, which has been stored in an external recording medium such as the storage apparatus 1224, the DVD drive 1226 (DVD-ROM 1227), the IC card and the like, to be read into the RAM 1214, thereby executing various types of processing on the data on the RAM 1214. Next, the CPU 1212 may write the processed data back in the external recording medium.

A various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby obtaining the attribute value of the second attribute associated with the first attribute that satisfies a predetermined condition.

The programs or software module described above may be stored on the computer 1200 or in a computer readable storage medium near the computer 1200. In addition, a recording medium such as a hard disk or a RAM provided in a server system connected to a dedicated communication network or the Internet can be used as the computer readable storage medium, thereby providing the program to the computer 1200 via the network.

Blocks in flowcharts and block diagrams in the present embodiments may represent stages of processes in which operations are executed or "units" of apparatuses responsible for executing operations. A specific stage and "unit" may be implemented by dedicated circuit, programmable circuit supplied along with a computer readable instruction stored on a computer readable storage medium, and/or a processor supplied along with the computer readable instruction stored on the computer readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer readable storage medium may include any tangible device capable of storing an instruction executed by an appropriate device, so that the computer readable storage medium having the instruction stored thereon constitutes a product including an instruction that may be executed in order to provide means for executing an operation designated by a flowchart or a block diagram. Examples of the computer readable storage medium may include an electronic storage medium, a magnetic storage medium, an optical storage medium, an electromagnetic storage medium, a semiconductor storage medium, and the like. More specific examples of the computer readable storage medium may include a FLOPPY (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a BLU-RAY (registered trademark) disc, a memory stick, an integrated circuit card, or the like.

The computer readable instructions may include an assembler instruction, an instruction-set-architecture (ISA) instruction, a machine instruction, a machine dependent instruction, a microcode, a firmware instruction, state-setting data, or either of source code or object code described in any combination of one or more programming languages including an object oriented programming language such as SMALLTALK (registered trademark), JAVA (registered trademark), C++, or the like, and a conventional procedural programming language such as a "C" programming language or a similar programming language.

The computer readable instruction may be provided to a general purpose computer, a special purpose computer, or a processor or programmable circuit of another programmable data processing apparatus locally or via a local area network (LAN), a wide area network (WAN) such as the Internet or the like in order that the general purpose computer, the special purpose computer, or the processor or the programmable circuit of another programmable data processing apparatus executes the computer readable instruction to generate means for executing operations designated by the flowchart or the block diagram. Examples of the processor include a computer processor, a processing unit, a microprocessor, a digital signal processor, a controller, a microcontroller, and the like.

While the present invention has been described by way of the embodiments, the technical scope of the present invention is not limited to the above-described embodiments. It is apparent to persons skilled in the art that various alterations or improvements can be added to the above-described embodiments. It is also apparent from the scope of the claims that the embodiments added with such alterations or improvements can be included in the technical scope of the present invention.

The operations, procedures, steps, and stages of each process executed by a device, system, program, and method shown in the claims, embodiments, or diagrams can be achieved in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be executed in this order.

### EXPLANATION OF REFERENCES

10: system, 20: network, 40: gateway, 60: user terminal, 80: communication satellite, 100: flight vehicle, 121: main wing portion, 122: main body portion, 124: propeller, 130: solar cell panel, 132: SL antenna, 134: FL antenna, 142: wireless communication area, 150: control apparatus, 200: environmental information management apparatus, 300: information processing apparatus, 302: flight vehicle related information obtainment unit, 304: flight vehicle control unit, 306: environmental information obtainment unit, 308: weather prediction unit, 310: prediction result obtainment unit, 312: condition setting unit, 314: flight path determination unit, 316: score information obtainment unit, 318: supervised data storage unit, 320: model generation unit, 324: flight path information provision unit, 326: timing determination unit, 328: timing information provision unit, 400: remote control apparatus, 410: reception unit, 420: display unit, 430: input unit, 440: generation unit, 450: transmission unit, 1200: computer, 1210: host controller, 1212: CPU, 1214: RAM, 1216: graphics controller, 1218: display device, 1220: input/output controller, 1222: communication interface, 1224: storage apparatus, 1226: DVD drive, 1227: DVD-ROM, 1230: ROM, 1240: input/output chip, and 1242: keyboard.

## Claims

1. An information processing apparatus comprising:
a prediction result obtainment unit which obtains a result of prediction of weather in stratosphere and a result of prediction of weather in troposphere; and
a flight path determination unit which determines a flight path of a flight vehicle based on the result of prediction of weather in stratosphere and the result of prediction of weather in troposphere such that the flight vehicle flies through an area in stratosphere that has been predicted to satisfy a predetermined stratospheric path condition and further flies through an area in troposphere that has been predicted to satisfy a predetermined tropospheric path condition, wherein the flight vehicle functions as a stratospheric platform, and forms a wireless communication area by emitting a beam and provides a wireless communication service to a user terminal in the wireless communication area.

2. The information processing apparatus according to claim 1, wherein the flight path determination unit determines the flight path based on a predicted wind speed in stratosphere included in the result of prediction of weather in stratosphere and on a predicted wind speed in troposphere included in the result of prediction of weather in troposphere, such that the flight vehicle flies through an area in stratosphere where the predicted wind speed in stratosphere is lower than a predetermined stratospheric wind speed threshold and flies through an area in troposphere where the predicted wind speed in troposphere is lower than a predetermined tropospheric wind speed threshold.

3. The information processing apparatus according to claim 1 or2, wherein the flight path determination unit determines the flight path based on a predicted cloud amount in stratosphere included in the result of prediction of weather in stratosphere and on a predicted cloud amount in troposphere included in the result of prediction of weather in troposphere, such that the flight vehicle flies through an area in stratosphere where the predicted cloud amount in stratosphere is lower than a predetermined stratospheric cloud amount threshold and flies through an area in troposphere where the predicted cloud amount in troposphere is lower than a predetermined tropospheric cloud amount threshold.

4. The information processing apparatus according to any one of claims 1 to 3, wherein the flight path determination unit determines the flight path based on a predicted temperature in stratosphere included in the result of prediction of weather in stratosphere and on a predicted temperature in troposphere included in the result of prediction of weather in troposphere, such that the flight vehicle flies through an area in stratosphere where the predicted temperature in stratosphere is higher than a predetermined stratospheric temperature threshold and flies through an area in troposphere where the predicted temperature in troposphere is higher than a predetermined tropospheric temperature threshold.

5. The information processing apparatus according to any one of claims 1 to 4, wherein the flight path determination unit determines the flight path by giving priority to a flight path with a shorter flight distance that the flight vehicle flies to a target point, among flight paths for a flight through the area in stratosphere that has been predicted to satisfy the stratospheric path condition and the area in troposphere that has been predicted to satisfy the tropospheric path condition.

6. The information processing apparatus according to any one of claims 1 to 4, wherein the flight path determination unit determines the flight path by giving priority to a flight path with a shorter flight time required for the flight vehicle to fly to a target point, among flight paths for a flight through the area in stratosphere that has been predicted to satisfy the stratospheric path condition and the area in troposphere that has been predicted to satisfy the tropospheric path condition.

7. The information processing apparatus according to any one of claims 1 to 4, wherein the flight path determination unit determines the flight path by giving priority to a flight path with less electrical power required for the flight vehicle to fly to a target point, among flight paths for a flight through the area in stratosphere that has been predicted to satisfy the stratospheric path condition and the area in troposphere that has been predicted to satisfy the tropospheric path condition.

8. The information processing apparatus according to any one of claims 1 to 4, comprising:
a supervised data storage unit which associates and stores flight path information indicating the flight path determined by the flight path determination unit, weather information indicating weather along the flight path when the flight vehicle has flown along the flight path, and score information indicating a score for the flight path; and
a model generation unit which generates, by machine learning, an estimation model that estimates the score for the flight path, by using, as supervised data, a plurality of pieces of the flight path information, the weather information, and the score information that are stored in the supervised data storage unit, from the result of prediction of weather in stratosphere and the result of prediction of weather in troposphere that are obtained by the prediction result obtainment unit and from the flight path determined by the flight path determination unit, wherein
the flight path determination unit determines the flight path by giving priority to a flight path for which the score estimated using the estimation model is higher, among flight paths for a flight through the area in stratosphere that has been predicted to satisfy the stratospheric path condition and the area in troposphere that has been predicted to satisfy the tropospheric path condition, from the result of prediction of weather in stratosphere and the result of prediction of weather in troposphere and from the flight path.

9. The information processing apparatus according to any one of claims 1 to 8, wherein
the prediction result obtainment unit further obtains a result of prediction of weather at tropopause that is a boundary surface between troposphere and stratosphere, and
the flight path determination unit determines the flight path based on the result of prediction of weather at tropopause such that the flight vehicle further flies through an area at tropopause that has been predicted to satisfy a predetermined tropopause path condition.

10. The information processing apparatus according to claim 9, wherein
the flight path determination unit determines the flight path based on a predicted wind speed at tropopause included in the result of prediction of weather at tropopause, such that the flight vehicle flies through an area at tropopause where the predicted wind speed at tropopause is lower than a predetermined tropopause wind speed threshold.

11. The information processing apparatus according to any one of claims 1 to 10, comprising:
a flight vehicle related information obtainment unit which obtains flight position information indicating a flight position of the flight vehicle and flight control availability information indicating whether a flight of the flight vehicle can be controlled or cannot be controlled; and
a timing determination unit which, if the flight control availability information indicates that the flight of the flight vehicle cannot be controlled, determines timing when a parachute mounted on the flight vehicle is to be opened, based on the flight position indicated by the flight position information and on the result of prediction of weather in stratosphere and the result of prediction of weather in troposphere.

12. The information processing apparatus according to any one of claims 1 to 11, wherein
the flight path determination unit determines the flight path such that the flight vehicle makes a duration flight through the area in stratosphere that has been predicted to satisfy the stratospheric path condition.

13. An information processing apparatus comprising:
a prediction result obtainment unit which obtains a result of prediction of weather in stratosphere; and
a flight path determination unit which determines a flight path of a flight vehicle based on the result of prediction of weather in stratosphere such that the flight vehicle makes a duration flight through an area in stratosphere that has been predicted to satisfy a predetermined stratospheric path condition, wherein the flight vehicle functions as a stratospheric platform, and forms a wireless communication area by emitting a beam and provides a wireless communication service to a user terminal in the wireless communication area.

14. The information processing apparatus according to claim 12 or 13, wherein
the flight path determination unit determines the flight path based on a predicted temperature in stratosphere included in the result of prediction of weather in stratosphere, such that the flight vehicle makes a duration flight through an area in stratosphere where the predicted temperature in stratosphere is higher than a predetermined stratospheric temperature threshold.

15. The information processing apparatus according to any one of claims 12 to 14, further comprising an ozone concentration obtainment unit which obtains an ozone concentration in stratosphere, wherein
the flight path determination unit determines the flight path such that the flight vehicle makes a duration flight through an area in stratosphere where the ozone concentration in stratosphere is higher than a predetermined ozone concentration threshold.

16. The information processing apparatus according to any one of claims 12 to 15, wherein
the flight path determination unit determines the flight path along which the flight vehicle makes a duration flight through stratosphere, based on a predicted wind speed and a predicted wind direction in stratosphere included in the result of prediction of weather in stratosphere, such that a shift in the wireless communication area caused by wind in stratosphere is reduced.

17. The information processing apparatus according to any one of claims 1 to 16, further comprising:
a weather information obtainment unit which obtains weather information indicating weather in stratosphere; and a weather prediction unit which predicts weather in stratosphere based on the weather information, wherein
the flight path determination unit determines the flight path of the flight vehicle based on the result of prediction of weather in stratosphere predicted by the weather prediction unit.

18. An information processing apparatus, comprising:
a weather information obtainment unit which obtains weather information indicating weather in stratosphere;
a weather prediction unit which predicts weather in stratosphere based on the weather information;
a prediction result obtainment unit which obtains a result of prediction of weather in stratosphere predicted by the weather prediction unit; and
a flight path determination unit which determines a flight path of a flight vehicle based on the result of prediction of weather in stratosphere such that the flight vehicle flies through an area in stratosphere that has been predicted to satisfy a predetermined stratospheric path condition, wherein the flight vehicle functions as a stratospheric platform, and forms a wireless communication area by emitting a beam and provides a wireless communication service to a user terminal in the wireless communication area.

19. A program that causes a computer to function as the information processing apparatus according to any one of claims 1 to 18.

20. A system comprising:
the information processing apparatus according to any one of claims 1 to 18; and
the flight vehicle.

21. An information processing method executed by a computer, the method comprising:
obtaining a result of prediction of weather in stratosphere and a result of prediction of weather in troposphere; and
determining a flight path of a flight vehicle based on the result of prediction of weather in stratosphere and the result of prediction of weather in troposphere such that the flight vehicle flies through an area in stratosphere that has been predicted to satisfy a predetermined stratospheric path condition and further flies through an area in troposphere that has been predicted to satisfy a predetermined tropospheric path condition, wherein the flight vehicle functions as a stratospheric platform, and forms a wireless communication area by emitting a beam and provides a wireless communication service to a user terminal in the wireless communication area.

22. An information processing method executed by a computer, the method comprising:
obtaining a result of prediction of weather in stratosphere; and
determining a flight path of a flight vehicle based on the result of prediction of weather in stratosphere such that the flight vehicle makes a duration flight through an area in stratosphere that has been predicted to satisfy a predetermined stratospheric path condition, wherein the flight vehicle functions as a stratospheric platform, and forms a wireless communication area by emitting a beam and provides a wireless communication service to a user terminal in the wireless communication area.

23. An information processing method executed by a computer, the method comprising:
obtaining weather information indicating weather in stratosphere;
predicting weather in stratosphere based on the weather information;
obtaining a result of prediction of weather in stratosphere predicted in the predicting the weather; and
determining a flight path of a flight vehicle based on the result of prediction of weather in stratosphere such that the flight vehicle flies through an area in stratosphere that has been predicted to satisfy a predetermined stratospheric path condition, wherein the flight vehicle functions as a stratospheric platform, and forms a wireless communication area by emitting a beam and provides a wireless communication service to a user terminal in the wireless communication area.
